# EUROPÄISCHE PATENTSCHRIFT

(11) **EP 4 124 596 B1**
(45) Veröffentlichungstag und Bekanntmachung des Hinweises auf die Patenterteilung: **01.05.2024**
(21) Anmeldenummer: 21188181.8
(22) Anmeldetag: 28.07.2021
(51) Int. Cl.: B65G 54/02, B65B 35/00

(54) **BEARBEITUNGSVORRICHTUNG UND VERFAHREN ZUM PROCESSING EINES BEHÄLTERS**
PROCESSING DEVICE AND METHOD FOR PROCESSING A CONTAINER
DISPOSITIF DE TRAITEMENT ET PROCÉDÉ DE TRAITEMENT D'UN RÉCIPIENT

(43) Veröffentlichungstag der Anmeldung: 01.02.2023
(73) Patentinhaber: TT Innovation AG, 6300 Zug (CH)
(72) Erfinder: Tondera, Marc, 4125 Riehen (CH); Schneidler, Tobias Jan, 6332 Hagendorn (CH); Carli, Julia Annette, 4053 Basel (CH); Müller, Mathieu, 68510 Sierentz (FR); Leuenberger, Philipp, 4052 Basel (CH); Rethoret, Christophe, 68500 Issenheim (FR); Zeller, Mike, 4246 Wahlen (CH)
(74) Vertreter: Mertzlufft-Paufler, Cornelius

(56) Entgegenhaltungen:
- EP-A1- 2 544 974
- EP-A1- 3 828 106
- WO-A1-2016/012160

## Beschreibung

Die Erfindung betrifft eine Bearbeitungsvorrichtung zum Processing wenigstens eines Behälters, mit einer Transporteinheit, die magnetisch an eine Statoranordnung gekoppelt ist und durch eine Bestromung der Statoranordnung auf einer Antriebsfläche verfahrbar ist, wobei wenigstens ein Unterstützungselement einen Arbeitsraum zum Processing des Behälters definiert, wobei der Behälter durch eine Relativbewegung von Transporteinheit und Unterstützungselement mit dem Unterstützungselement koppelbar ist.

Die Erfindung betrifft weiter ein Verfahren zum Processing wenigstens eines Behälters, wobei der wenigstens eine Behälter mit einer Transporteinheit, die magnetisch an eine Statoranordnung gekoppelt ist und durch eine Bestromung der Statoranordnung auf einer Antriebsfläche verfahrbar ist, zu wenigstens einem Unterstützungselement verfahren wird, wobei der wenigstens eine Behälter durch eine Relativbewegung von Transporteinheit und Unterstützungselement mit dem wenigstens einen Unterstützungselement gekoppelt wird. WO 2016012160 A1 offenbart den Oberbegriff des Anspruchs 1 und den Oberbegriff des Anspruchs 15.

Der Erfindung liegt die Aufgabe zugrunde, die Herstellung einer Bearbeitungsvorrichtung zu vereinfachen.

Zur Lösung der genannten Aufgabe sind erfindungsgemäß die Merkmale des Anspruchs 1 vorgesehen. Insbesondere wird somit zur Lösung der genannten Aufgabe bei einer

Bearbeitungsvorrichtung der eingangs beschriebenen Art erfindungsgemäß vorgeschlagen, dass die Transporteinheit wenigstens eine Behälteraufnahme, die den wenigstens einen Behälter trägt, hat, dass die wenigstens eine Behälteraufnahme von der Transporteinheit entkoppelbar ist und dass das wenigstens eine Unterstützungselement zum Koppeln an der wenigstens einen Behälteraufnahme angreift. Von Vorteil ist dabei, dass eine Transporteinheit verwendbar ist, die nicht auf den wenigstens einen Behälter abgestimmt sein muss. Dies kann helfen, die Herstellung der Transporteinheit zu vereinfachen, wenn beispielsweise unterschiedliche Behälter verarbeitet werden sollen. Zudem können durch die Behälteraufnahmen auch nicht selbststehende Behälter an die Unterstützungselemente übergeben werden.

Die Antriebsfläche kann hierbei beliebig ausgerichtet sein, beispielsweise als eine vertikale Antriebsfläche oder eine horizontale Antriebsfläche oder als eine schräg gestellte Antriebsfläche, insbesondere als Rampe.

Bei einer vorteilhaften Ausgestaltung kann vorgesehen sein, dass die wenigstens eine Behälteraufnahme durch die Relativbewegung von der Transporteinheit entkoppelbar ist. Somit ist ein störender Einfluss der Transporteinheit auf einen Processing-Schritt, der im Arbeitsraum ausgeführt werden soll, reduzierbar oder sogar ganz eliminierbar.

Bei einer vorteilhaften Ausgestaltung kann vorgesehen sein, dass das wenigstens eine Unterstützungselement zum Angreifen an der wenigstens einen Behälteraufnahme, insbesondere zur vorzugsweise indirekten Ankopplung des wenigstens einen Behälters, verfahrbar ist. Somit sind empfindliche Ankopplungsmanöver unabhängig von einer Bewegungsgenauigkeit der Transporteinheit ausführbar.

Hierbei kann beispielsweise vorgesehen sein, dass das wenigstens eine Unterstützungselement an einer weiteren Transporteinheit angeordnet ist. Somit ist das wenigstens eine Unterstützungselement gemeinsam mit einem Träger verfahrbar.

Alternativ oder zusätzlich kann vorgesehen sein, dass das wenigstens eine Unterstützungselement verfahrbar an einem Träger angeordnet ist.

Bei einer vorteilhaften Ausgestaltung kann alternativ vorgesehen sein, dass das wenigstens eine Unterstützungselement ortsfest angeordnet ist. Somit sind zusätzliche Antriebe am Unterstützungselement verzichtbar. Eine Ankopplungsbewegung ist hier beispielsweise durch Verfahren und/oder Bewegen der Transporteinheit ausführbar.

Bei einer vorteilhaften Ausgestaltung kann vorgesehen sein, dass die Transporteinheit einen Durchgriff für das wenigstens eine Unterstützungselement zur Behälteraufnahme bildet. Somit ist ein einfaches Mittel beschrieben, eine sichere Befestigung der wenigstens einen Behälteraufnahme und eine zuverlässige Kopplung zu kombinieren. Beispielsweise kann der Durchgriff an einer Gabel ausgebildet sein.

Beispielsweise kann vorgesehen sein, dass der Durchgriff an einem die wenigstens eine Behälteraufnahme tragenden Grundkörper der Transporteinheit ausgebildet ist. Somit kann eine mittige Ankopplung an die Behälteraufnahme erreichbar sein. Eine Gefahr eines Verkippens bei der Ankopplung ist somit zumindest reduzierbar oder sogar vermeidbar.

Bei einer vorteilhaften Ausgestaltung kann vorgesehen sein, dass die wenigstens eine Behälteraufnahme an ihrer dem wenigstens einen Behälter zugewandten Seite an den wenigstens einen Behälter formangepasst ist. Somit sind Behälter, die keine oder nur eine unzureichende Aufstellfläche aufweisen, beispielsweise Karpulen oder Zylinderampullen, verkipp- und/oder verlustsicher aufnehmbar.

Bei einer vorteilhaften Ausgestaltung kann vorgesehen sein, dass die Transporteinheit eine Aufnahmegeometrie hat, mit welcher die wenigstens eine Behälteraufnahme aufnehmbar ist. Somit ist eine sichere Ankopplung der Behälteraufnahme an der Transporteinheit erreichbar.

Hierbei kann beispielsweise vorgesehen sein, dass die Aufnahmegeometrie eine Auflage hat, auf der die wenigstens eine Behälteraufnahme abgelegt ist. Somit sind zusätzliche Befestigungsmittel für die Behälteraufnahme an der Transporteinheit verzichtbar oder zumindest nicht in redundanter Ausführung erforderlich.

Bei einer vorteilhaften Ausgestaltung kann vorgesehen sein, dass das wenigstens eine Unterstützungselement die wenigstens eine Behälteraufnahme außenseitig greift.

Hierbei kann beispielsweise vorgesehen sein, dass das wenigstens eine Unterstützungselement eine Gabel zur Aufnahme der wenigstens einen Behälteraufnahme hat.

Bei einer vorteilhaften Ausgestaltung kann vorgesehen sein, dass die Bearbeitungsvorrichtung eine Prozessstation hat, mit welcher das Processing ausführbar ist. Von Vorteil ist dabei, dass komplexe Bearbeitungsschritte ausführbar sind.

Hierbei oder allgemein kann vorgesehen sein, dass die Prozessstation eine Füllstation, eine Waage, eine vorzugsweise optische Kontrollstation, eine Vereinzelungsstation, eine Handhabungsstation, eine Inspektionsvorrichtung, eine Waschstation, eine Muster- und/oder Reject-Entnahmestation und/oder eine Verschließstation, insbesondere zum Einbringen eines Stopfens, umfasst. Es sind somit einzelne oder mehrere, insbesondere alle, Schritte einer Befüllung eines Behälters mit der Bearbeitungsvorrichtung ausführbar. Die einzelnen Stationen können hierbei beispielsweise voneinander beabstandet oder integriert ausgebildet sein.

Bei einer vorteilhaften Ausgestaltung kann vorgesehen sein, dass das Unterstützungselement einen vorzugsweise beweglichen Teil einer, insbesondere der bereits erwähnten, Prozessstation, insbesondere einer Waage, einer Füllstation und/oder einer Verschließstation bildet. Somit ist ein Wägen, ein Befüllen und/oder ein Verschließen bei angekoppelter Behälteraufnahme ausführbar. Hierbei kann beispielsweise bei einer Waage der bewegliche Teil zur Gewichtsbestimmung vorgesehen sein. Beispielsweise bei einer Füllstation kann der bewegliche Teil zu einer Ausführung einer Relativbewegung einer Befüll-Nadel relativ zu einem Füllstand in dem wenigstens einen Behälter eingerichtet sein. Bei einer Verschließstation kann beispielsweise der bewegliche Teil zu einer Ausführung einer Stopfenbewegung eingerichtet sein.

Bei einer vorteilhaften Ausgestaltung kann vorgesehen sein, dass das wenigstens eine Unterstützungselement an einem Träger angeordnet ist, der einen Parkraum für die Transporteinheit während der Abkopplung des wenigstens einen Behälters bereitstellt. Somit ist eine Störung des Processing durch eine Anwesenheit der Transporteinheit beseitigbar oder zumindest reduzierbar.

Bei einer vorteilhaften Ausgestaltung kann vorgesehen sein, dass der Behälter lösbar mit der wenigstens einen Behälteraufnahme verbunden ist. Somit kann ein Behälter, beispielsweise nach einem Abschluss des erfindungsgemäßen Verfahrens, von der Behälteraufnahme entnommen werden. Die Behälteraufnahme ist somit wiederverwendbar.

Bei einer vorteilhaften Ausgestaltung kann vorgesehen sein, dass die wenigstens eine Behälteraufnahme lösbar mit einem Grundkörper der Transporteinheit verbunden ist. Somit ist die Behälteraufnahme einfach austauschbar, beispielsweise nach Abschluss des Processings und vor der Verarbeitung anders geformter Behälter.

Der Grundkörper kann hierbei beispielsweise austauschbar ausgestaltet sein. Somit ist die Transporteinheit auf einfache Weise an unterschiedliche Behälteraufnahmen, insbesondere an unterschiedlich dicke und/oder unterschiedlich lange Behälteraufnahmen und/oder Behälter, anpassbar. Beispielsweise können somit dicke Behälter in passenden Behälteraufnahmen mit großen, passenden Grundkörpern getragen werden und dünne Behälter in passenden Behälteraufnahmen mit kleinen, passenden Grundkörpern. Beispielsweise können somit auch lange und kurze Behälter und/oder Behälteraufnahmen mit unterschiedlichen Grundkörpern getragen werden, wobei eine Öffnung des Behälters auf gleicher Höhe angeordnet ist.

Bei einer vorteilhaften Ausgestaltung kann vorgesehen sein, dass das wenigstens eine Unterstützungselement an der oder benachbart zur Antriebsfläche befestigt ist. Somit sind die Transporteinheiten auf einfache Weise bis zum Unterstützungselement verfahrbar.

Das Unterstützungselement kann hierbei beispielsweise an einem Träger ausgebildet sein. Somit ist ein stabiles Widerlager bereitstellbar.

Bei einer vorteilhaften Ausgestaltung kann vorgesehen sein, dass das wenigstens eine Unterstützungselement so ausgerichtet ist, dass eine Koppelbewegung der Kopplung mit dem wenigstens einen Behälter längs der Antriebsfläche erfolgt. Somit ist eine Verfahrbewegung der Transporteinheit zum Ankoppeln verwendbar.

Bei einer vorteilhaften Ausgestaltung kann alternativ oder zusätzlich vorgesehen sein, dass das wenigstens eine Unterstützungselement so ausgerichtet ist, dass eine Koppelbewegung der Kopplung mit dem wenigstens einen Behälter quer zur Antriebsfläche erfolgt. Somit ist beispielsweise ein Hub- und/der Kippbewegung der Transporteinheit zum Ankoppeln verwendbar.

Bei einer vorteilhaften Ausgestaltung kann vorgesehen sein, dass die wenigstens eine Behälteraufnahme zur gleichzeitigen Aufnahme von mehr als einem Behälter ausgebildet ist. Somit sind mehrere Behälter gleichzeitig und/oder zeitlich parallel verarbeitbar.

Bei einer vorteilhaften Ausgestaltung kann vorgesehen sein, dass die wenigstens eine Behälteraufnahme zum Tragen eines abgestimmten Behälters mit nicht-ebenem Boden ausgebildet ist. Somit sind Behälter mit beliebig geformter Außenkontur verarbeitbar.

Bei einer vorteilhaften Ausgestaltung kann vorgesehen sein, dass die wenigstens eine Behälteraufnahme zweiteilig ausgeführt ist. Somit sind komplexe und/oder unterschiedliche Konturen einfach bereitstellbar.

Hierbei kann vorgesehen sein, dass sich ein Behälter-Teil, der mit dem wenigstens einen Behälter verbindbar ist, von einem Unterstützungs-Teil, der an das wenigstens eine Unterstützungselement und/oder die Transporteinheit koppelbar ist, trennen lässt. Somit können behälterseitig unterschiedlich geformte Behälteraufnahmen einfach ausgebildet werden.

Bei einer vorteilhaften Ausgestaltung kann vorgesehen sein, dass die wenigstens eine Behälteraufnahme im mit der Transporteinrichtung gekoppeltem Zustand durch Formschluss und/oder Kraftschluss in Position gehalten ist. Somit ist eine Ankopplung einfach und sicher erreichbar.

Beispielsweise kann der Kraftschluss durch Magnetkräfte erzeugt sein. Somit ist ein unbeabsichtigtes Lösen verhinderbar.

Bei einer vorteilhaften Ausgestaltung kann vorgesehen sein, dass die wenigstens eine Behälteraufnahme im mit dem Unterstützungselement gekoppeltem Zustand durch Formschluss und/oder Kraftschluss in Position gehalten ist. Somit ist eine sichere Handhabung der Behälteraufnahmen am Unterstützungselement erreichbar.

Beispielsweise kann der Kraftschluss durch Magnetkräfte erzeugt sein. Somit ist ein unbeabsichtigtes Lösen verhinderbar.

Bei einer vorteilhaften Ausgestaltung kann vorgesehen sein, dass die wenigstens eine Behälteraufnahme eine Aufnahmeform zum Koppeln mit dem wenigstens einen Unterstützungselement aufweist. Somit ist ein Greifen der Behälteraufnahme durch das Unterstützungselement ausführbar.

Die Aufnahmeform kann hierbei beispielsweise wenigstens einen Absatz und/oder wenigstens eine Ausnehmung aufweisen. Dies ermöglicht eine einfache Kraftübertragung auf die Behälteraufnahme. Die Ausnehmung kann beispielsweise als Rille oder Einkerbung ausgebildet sein.

Das Unterstützungselement kann hierbei alternativ oder zusätzlich eine Gabel aufweisen, die an der Aufnahmeform angreift. Somit ist die Behälteraufnahme auf einfache Weise außenseitig greifbar.

Beispielsweise kann hierbei vorgesehen sein, dass die Gabel an dem erwähnten wenigstens einen Anschlag und/oder in die erwähnte wenigstens eine Ausnehmung angreift oder eingreift. Somit ist auf einfache Weise ein Formschluss erreichbar.

Bei einer vorteilhaften Ausgestaltung kann vorgesehen sein, dass mehr als eine Behälteraufnahme vorhanden ist. Von Vorteil ist dabei, dass die Behälteraufnahmen unabhängig voneinander von der Transporteinheit lösbar ausgebildet werden können.

Hierbei kann beispielsweise vorgesehen sein, dass die Behälteraufnahmen zumindest teilweise separat voneinander und/oder gemeinsam mit dem wenigstens einen Unterstützungselement koppelbar sind. Es sind somit Gruppen, die jeweils wenigstens eine Behälteraufnahme umfassen, bildbar, die jeweils gemeinsam - als Gruppe - aber separat von dem übrigen Gruppen mit dem wenigstens einen Unterstützungselement in Kontakt bringbar sind. Hierbei kann jeder Gruppe ein individuelles Unterstützungselement zugeordnet sein. Somit sind beispielsweise unterschiedliche Arten von Behältern in Gruppen geordnet zeitlich parallel oder gleichzeitig verarbeitbar.

Hierbei kann alternativ oder zusätzlich beispielsweise vorgesehen sein, dass die Behälteraufnahmen zumindest teilweise separat voneinander und/oder gemeinsam von der Transporteinheit entkoppelbar sind. Es sind somit Gruppen, die jeweils wenigstens einer Behälteraufnahme umfassen, bildbar, die jeweils gemeinsam - als Gruppe - aber separat von dem übrigen Gruppen von der Transporteinheit trennbar sind. Somit sind die Behälteraufnahmen individuell oder in Gruppen austauschbar, beispielsweise für eine einfache Anpassung an unterschiedliche Behälter.

Bei einer vorteilhaften Ausgestaltung kann vorgesehen sein, dass in einem Vorrat Behälteraufnahmen oder Behälter-Teile davon bereitgehalten sind, die wahlweise je nach zu transportierendem Behälter an der Transporteinheit austauschbar sind. Somit sind Behälteraufnahmen und/oder Behälter-Teile einfach, insbesondere ohne manuelles Eingreifen, austauschbar. Hierbei kann beispielsweise vorgesehen sein, dass der Vorrat durch die Transporteinheiten anfahrbar ist.

Alternativ oder zusätzlich sind zur Lösung der genannten Aufgabe erfindungsgemäß die Merkmale des nebengeordneten, auf Verfahren gerichteten Anspruchs vorgesehen. Insbesondere wird somit zur Lösung der genannten Aufgabe bei einem Verfahren der eingangs beschriebenen Art erfindungsgemäß vorgeschlagen, dass wenigstens eine Behälteraufnahme der Transporteinheit den wenigstens einen Behälter trägt, dass die wenigstens eine Behälteraufnahme von der Transporteinheit entkoppelbar ist, dass das wenigstens eine Unterstützungselement zum Koppeln an der wenigstens einen Behälteraufnahme angreift und dass das Processing des wenigstens einen Behälters ausgeführt wird, wenn das wenigstens eine Unterstützungselement an der wenigstens einen Behälteraufnahme angreift. Somit ist ein flexibel konfigurierbares Verfahren bereitstellbar, mit welchem unterschiedliche Behälter verarbeitbar sind. Somit kann erreicht werden, dass das Processing des wenigstens einen Behälters ausgeführt wird, wenn der wenigstens eine Behälter mit dem wenigstens einen Unterstützungselement gekoppelt ist.

Besonders günstig ist es dabei, wenn das erfindungsgemäße Verfahren mit einer erfindungsgemäßen Bearbeitungsvorrichtung, insbesondere wie zuvor oder nachfolgend beschrieben und/oder nach einem der auf eine Bearbeitungsvorrichtung gerichteten Ansprüche, ausgeführt wird.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt in stark vereinfachten Prinzipdarstellungen:
- Fig. 1: eine erfindungsgemäße Bearbeitungsvorrichtung in einer Seitenansicht, bei welcher die Behälteraufnahmen mit der Transporteinheit gekoppelt sind,
- Fig. 2: die Bearbeitungsvorrichtung aus Fig. 1, wobei die Behälteraufnahmen mit einem Unterstützungselement gekoppelt sind,
- Fig. 3: die Bearbeitungsvorrichtung aus Fig. 2 in einer vergrößerten Darstellung, wobei die Behälteraufnahmen von der Transporteinheit abgekoppelt sind,
- Fig. 4: die Bearbeitungsvorrichtung aus Fig. 1 in einer Ansicht von vorn auf die Antriebsfläche,
- Fig. 5: die Bearbeitungsvorrichtung aus Fig. 2 in einer Ansicht von vorn auf die Antriebsfläche,
- Fig. 6: die Bearbeitungsvorrichtung aus Fig. 3 in einer Ansicht von vorn auf die Antriebsfläche,
- Fig. 7: eine weitere erfindungsgemäße Bearbeitungsvorrichtung in einer Seitenansicht, bei welcher die Behälteraufnahmen mit der Transporteinheit gekoppelt sind,
- Fig. 8: die Bearbeitungsvorrichtung aus Fig. 7 in einer verkleinerten Darstellung, wobei die Behälteraufnahmen mit einem Unterstützungselement gekoppelt sind,
- Fig. 9: die Bearbeitungsvorrichtung aus Fig. 8, wobei die Behälteraufnahmen von der Transporteinheit abgekoppelt sind,
- Fig. 10: eine weitere erfindungsgemäße Bearbeitungsvorrichtung in einer Seitenansicht, bei welcher die Behälteraufnahmen mit der Transporteinheit gekoppelt sind,
- Fig. 11: die Bearbeitungsvorrichtung aus Fig. 10, wobei die Behälteraufnahmen mit einem Unterstützungselement gekoppelt sind,
- Fig. 12: die Bearbeitungsvorrichtung aus Fig. 11, wobei die Behälteraufnahmen von der Transporteinheit abgekoppelt sind,
- Fig. 13: einen Bewegungsablauf des An- und Abkoppelns bei einer weiteren erfindungsgemäßen Bearbeitungsvorrichtung,
- Fig. 14: eine weitere erfindungsgemäße Bearbeitungsvorrichtung,
- Fig. 15: die Bearbeitungsvorrichtung aus Fig. 14 in einer Ansicht von vorn auf die Antriebsfläche,
- Fig. 16: eine Variante zu Fig. 15,
- Fig. 17: eine weitere erfindungsgemäße Bearbeitungsvorrichtung,
- Fig. 18: eine weitere erfindungsgemäße Bearbeitungsvorrichtung,
- Fig. 19: eine Variante zu Fig. 18,
- Fig. 20: einen Bewegungsablauf des An- und Abkoppelns bei einer weiteren erfindungsgemäßen Bearbeitungsvorrichtung,
- Fig. 21: einen Bewegungsablauf des An- und Abkoppelns bei einer weiteren erfindungsgemäßen Bearbeitungsvorrichtung,
- Fig. 22: eine Variante zu dem Bewegungsablauf nach Fig. 21,
- Fig. 23: eine Verwendung von Behältern mit unebenem Boden,
- Fig. 24: eine Variante zu Fig. 20,
- Fig. 25: eine gleichzeitige Verarbeitung unterschiedlicher Behälter und
- Fig. 26: eine Variante zu Fig. 25.

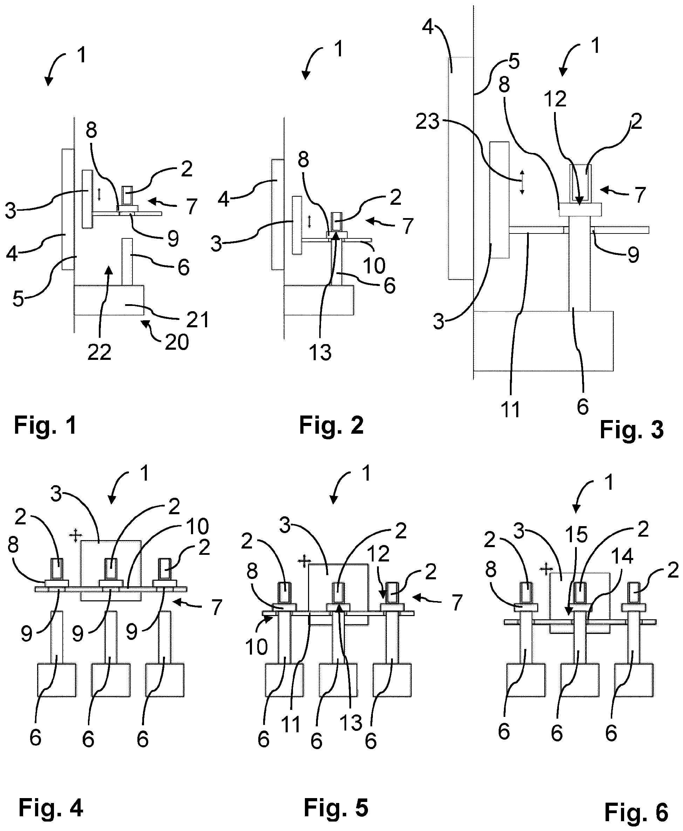

Die Figuren 1 bis 6 zeigen ein erstes Ausführungsbeispiel einer erfindungsgemäßen, im Ganzen mit 1 bezeichneten Bearbeitungsvorrichtung zum Processing wenigstens eines Behälters 2 und werden im Folgenden gemeinsam beschrieben.

Die Bearbeitungsvorrichtung 1 hat wenigstens eine Transporteinheit 3, die magnetisch an eine Statoranordnung 4 gekoppelt ist. Die Statoranordnung 4 hat in an sich bekannter Weise mehrere Spulen, die bestromt werden können. Durch geeignete Bestromung der Statoranordnung 4 kann die Transporteinheit 3 auf einer Antriebsfläche 5 verfahren werden, von dieser entfernt oder an diese angenähert werden, um eine Achse, die senkrecht auf der Antriebsfläche 5 steht, gedreht werden oder um eine Achse, die parallel zu der Antriebsfläche 5 liegt, gekippt werden.

Die Statoranordnung 4 kann gleichzeitig an mehrere Transporteinheiten 3 ankoppeln, die durch eine entsprechende lokale Ansteuerung oder Vorgabe einer Bestromung unabhängig voneinander bewegbar sind.

Die Bearbeitungsvorrichtung 1 hat weiter wenigstens ein Unterstützungselement 6, das - im Beispiel über sich - einen Arbeitsraum 7 zum Processing des Behälters 2 definiert.

Ein solches Processing kann beispielweise ein Befüllen und/oder ein Wägen und/oder eine vorzugsweise optische Begutachtung und/oder ein Verschließen des Behälters 2 und/oder eine andere vorzugsweise automatisierte Verarbeitung und/oder Handhabung und/oder Übergabe an ein oder Übergabe von einem Fremdsystem sein.

Der Behälter 2 ist durch eine Relativbewegung von Transporteinheit 3 und Unterstützungselement 6 mit dem Unterstützungselement 6 (indirekt, über eine noch genauer beschriebene Behälteraufnahme 8) koppelbar. Im Ausführungsbeispiel erfolgt dies in der Bewegung zwischen den Figuren 1 und 4 einerseits und den Figuren 2 und 5 andererseits. Die Kopplung wird hier beispielhaft durch ein Berühren des Unterstützungselements 6 oder Aufsetzen auf dem Unterstützungselement 6 hergestellt. Hierzu ist das wenigstens eine Unterstützungselement 6 so ausgerichtet, dass eine Koppelbewegung der (indirekten) Kopplung mit dem wenigstens einen Behälter 2 längs der Antriebsfläche 5 durch die Verfahrbewegung 23 erfolgt.

Die Figuren 4 bis 6 zeigen den Fall einer Bearbeitungsvorrichtung 1 mit drei Unterstützungselementen 6, die gemeinsam einen Arbeitsraum 7 definieren.

Bei anderen Ausführungsbeispielen sind andere Anzahlen von Unterstützungselementen 6 und/oder Behältern 2 vorhanden.

Die Transporteinheit 3 trägt wenigstens eine Behälteraufnahme 8. Der wenigstens eine Behälter 2 ist mit der Behälteraufnahme 8 in Kontakt. Die Behälteraufnahmen 8 sind hierbei unabhängig voneinander von der Transporteinheit 3 entnehmbar und mit dem jeweils zugeordneten Unterstützungselement 6 koppelbar.

Diese wenigstens eine Behälteraufnahme 8 kann von der Transporteinheit 3 entkoppelt oder gelöst werden.

Um den Behälter 2 (indirekt) mit dem Unterstützungselement 6 zu koppeln, greift das wenigstens eine Unterstützungselement 6 an der Behälteraufnahme 8 an (Fig. 2 und 5).

Wird die Transporteinheit 3 weiter längs der Antriebsfläche relativ zu dem Unterstützungselement 6 verfahren, so wird die Behälteraufnahme 2 von der Transporteinheit 3 entkoppelt (Fig. 3 und 6) .

Die wenigstens eine Behälteraufnahme 8 ist somit lösbar mit dem Grundkörper 11 der Transporteinheit 3 verbunden und kann leicht ausgetauscht werden.

Die Transporteinheit 1 bildet einen Durchgriff 9 an einer Gabel 10. Das wenigstens eine Unterstützungselement 6 greift durch den Durchgriff 9 an der Behälteraufnahme 2 an und hebt diese aus.

Die Gabel 10 (oder in weiteren Ausführungsbeispielen beispielsweise eine Lochplatte) ist hierbei an einem Grundköper 11 der Transporteinheit 3 befestigt oder ausgebildet.

An einer Seite 12 der Behälteraufnahme 8, die dem Behälter 2 zugewandt ist, ist die Behälteraufnahme 8 an eine Außenkontur eines unteren Bereichs des Behälters 2 angepasst. Es sind so auch Behälter 2 mit sehr kleiner oder ohne Aufstellfläche 13 sicher haltbar.

Die Transporteinheit 3 hat an ihrem Grundkörper 10 eine Ausnahmegeometrie 14, die an eine Außenkontur der Behälteraufnahme 8 angepasst ist.

Im gezeigten Ausführungsbeispiel bildet die Aufnahmegeometrie 14 eine Auflage 15, auf der die Behälteraufnahme 8 abgelegt werden kann.

Das wenigstens eine Unterstützungselement 6 ist in dem gezeigten Ausführungsbeispiel stiftförmig ausgebildet.

Bei weiteren Ausführungsbeispielen ist die Prozessstation 20 beispielsweise als Füllstation oder Verschließstation oder optische Kontrollstation ausgebildet.

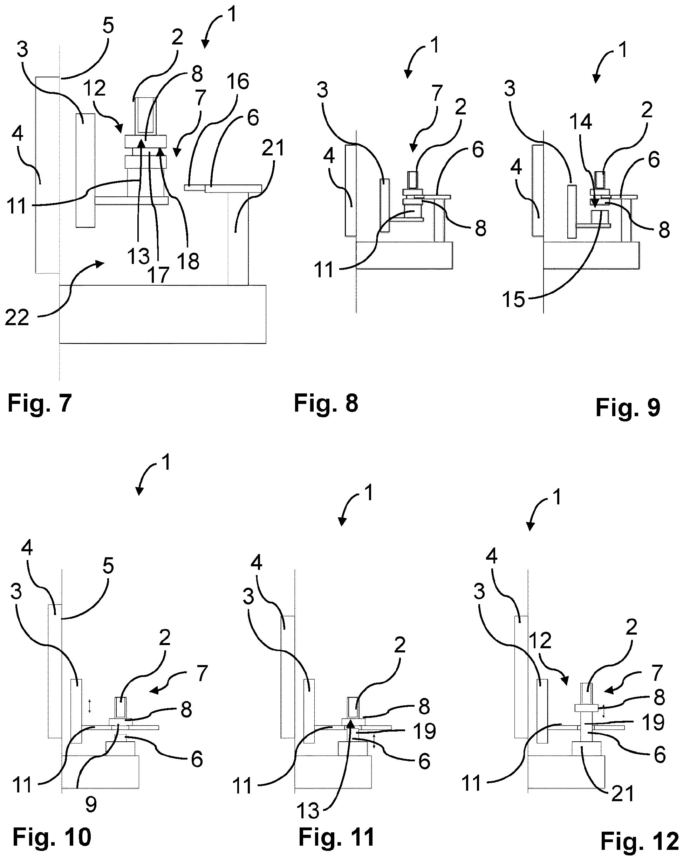

Fig. 7 bis 9 zeigen ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 6 gelten daher zu den Figuren 7 bis 9 entsprechend.

Figur 7 zeigt die Situation, in welcher die Behälteraufnahme 8 mit dem Behälter 2 und der Transporteinheit 3 gekoppelt ist. Figur 8 stellt die Ankopplung der Behälteraufnahme 8 an ein gabelförmiges Unterstützungselement 6 dar. Schließlich zeigt Figur 9 die Situation, in welcher die Behälteraufnahme 8 von der Transporteinheit 3 abgekoppelt oder getrennt ist.

Das Ausführungsbeispiel nach den Figuren 7 bis 9 unterscheidet sich von dem vorangehenden Ausführungsbeispiel zumindest dadurch, dass eine Koppelbewegung zur Herstellung einer Kopplung zwischen dem Unterstützungselement 6 und der Behälteraufnahme 8 zumindest teilweise senkrecht zur Antriebsfläche 5, also beispielsweise durch einen Hub, erfolgt.

Eine Entkopplung der Behälteraufnahme 8 von der Transporteinheit 3 erfolgt durch eine Verfahrbewegung 23 längs der Antriebsfläche (hier vertikal).

Das Ausführungsbeispiel gemäß Fig. 7 bis 9 unterscheidet sich weiter von dem vorangehenden Ausführungsbeispiel dadurch, dass das Unterstützungselement 6 als Gabel 16 ausgebildet ist, die die Behälteraufnahme 8 beidseitig umgreift.

Die Gabel 16 greift in eine Ausnehmung 17 ein.

Die Ausnehmung 17 umläuft die Behälteraufnahme 8 ringförmig.

Das Unterstützungselement 6 liegt in der Ausnehmung 17 an einem Absatz 18 an der Behälteraufnahme 8 an.

Das Unterstützungselement 6 ist ortsfest an einem Träger 21 ausgebildet.

Der Träger 21 ist so geformt, dass ein Parkraum 22 für die Transporteinheit 3 während dem Processing des wenigstens einen Behälters 2 im Arbeitsraum 7 geschaffen ist.

Das Ausführungsbeispiel nach Fig. 7 bis 9 unterscheidet sich von dem vorangehenden Ausführungsbeispiel weiter dadurch, dass das wenigstens eine Unterstützungselement 6 benachbart zur Antriebsfläche 5 befestigt ist.

Hierbei ist das wenigstens eine Unterstützungselement 6 derart orientiert, dass eine Koppelbewegung der Kopplung mit dem wenigstens einen Behälter 2 (über die Behälteraufnahme 8) quer zur Antriebsfläche 5 erfolgt (Übergang von Fig. 7 zu Fig. 8). Die Transporteinheit 3 führt hierbei eine Hubbewegung aus, die wegen der vertikalen Aufstellung der Antriebsfläche 5 horizontal orientiert ist.

Fig. 10 bis 12 zeigen ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 9 gelten daher zu den Figuren 10 bis 12 entsprechend.

Das Ausführungsbeispiel nach den Figuren 10 bis 12 unterscheidet sich von den vorangehenden Ausführungsbeispielen zumindest dadurch, dass das wenigstens eine Unterstützungselement 6 verfahrbar ist, um die Relativbewegung zwischen der Transporteinheit 3 und dem wenigstens einen Unterstützungselement 6 zu erzeugen. Das Unterstützungselement 6 stützt sich hierbei auf einem Träger 21 ab.

Dementsprechend zeigt Figur 10 ein vollständig eingefahrenes Unterstützungselement 6, Figur 11 ein Unterstützungselement 6, das so weit ausgefahren ist, bis es die Behälteraufnahme 8 kontaktiert, während Figur 12 eine Behälteraufnahme 8 zeigt, die von der Transporteinheit 3 entkoppelt ist.

Das Unterstützungselement 6 ist ein beweglicher Teil 19 einer Prozessstation 20.

Bei weiteren Ausführungsbeispielen ist das Unterstützungselement 6 als beweglicher Teil 19 einer Waage ausgebildet, wobei eine Position des beweglichen Teils in an sich bekannter Weise zur Gewichtsbestimmung des Behälters 2 (tara, netto und/oder brutto) verwendet wird.

Bei weiteren Ausführungsbeispielen ist das Unterstützungselement 6 als beweglicher Teil einer Füllstation ausgebildet, wobei an dem beweglichen Teil eine an sich bekannte Befüll-Nadel angeordnet ist. Die Beweglichkeit kann hierbei beispielsweise verwendet werden, um die Befüll-Nadel in den Behälter 2 einzuführen. Dies kann jedoch auch durch eine Bewegung der Transporteinheit 3 ausgeführt werden. Die Beweglichkeit kann daher alternativ oder zusätzlich beispielsweise zu einem Nachführen der Befüll-Nadel, um ein Eintauchen unter den jeweiligen aktuellen Füllstand zu vermeiden und/oder einen maximalen Abstand zum Füllstand einzuhalten, verwendet werden.

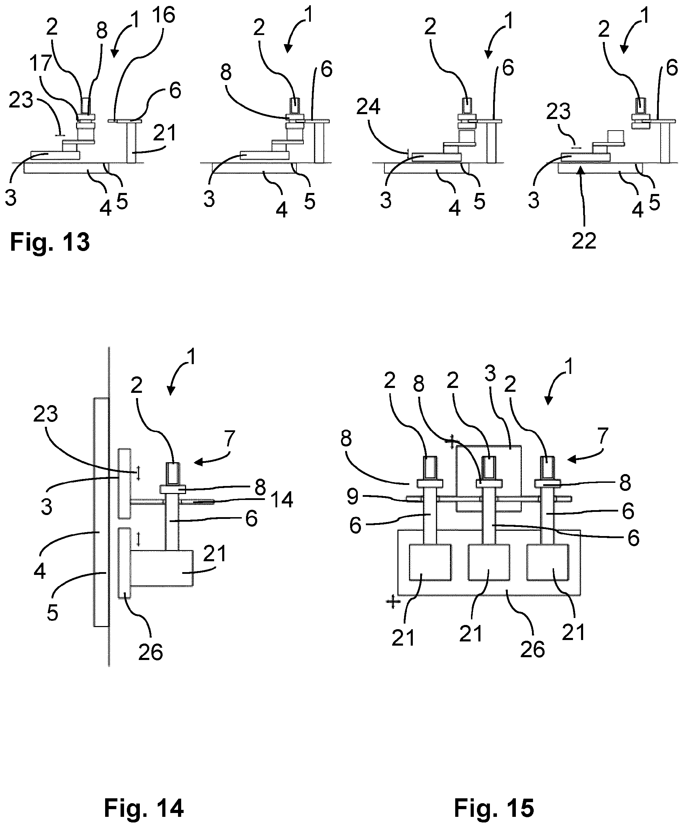

Fig. 13 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 12 gelten daher zu Figur 13 entsprechend.

Das Ausführungsbeispiel nach Fig. 13 unterscheidet sich von den vorangehenden Ausführungsbeispielen dadurch, dass die Antriebsfläche 5 horizontal ausgerichtet ist.

Von links nach rechts ist der folgende Bewegungsablauf gezeigt.

Zunächst wird die Transporteinheit 3 in einer Verfahrbewegung 23 zu der Prozessstation 20 verfahren, bis die wenigstens eine Behälteraufnahme 8 in der Gabel 16 des Unterstützungselements 6 angeordnet ist (2. Bild von links).

Dann wird eine Hubbewegung 24 ausgeführt, um die Behälteraufnahme(n) 8 abzusenken. Dies führt zu einer Kopplung der Behälteraufnahme(n) 8 mit dem Unterstützungselement 6 und einer Entkopplung der Behälteraufnahme(n) 8 von der Transporteinheit 3 (3. Bild von links).

Anschließend (Bild rechts) wird die Transporteinheit 3 in eine Parkposition 22 verfahren, und das Processing des wenigstens einen Behälters 2 kann durchgeführt werden.

Fig. 14 und 15 zeigen ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 13 gelten daher zu den Figuren 14 und 15 entsprechend.

Das Ausführungsbeispiel nach den Fig. 14 und 15 unterscheidet sich von den vorangegangenen Ausführungsbeispielen zumindest dadurch, dass das Unterstützungselement 6 auf einer eigenen Transporteinheit 26 angeordnet ist. Die Transporteinheit 26 ist in gleicher Weise wie die wenigstens eine Transporteinheit 3 an die Statoranordnung 4 angekoppelt und unabhängig von der Transporteinheit 3 auf der Antriebsfläche 5 verfahrbar.

Bei dem Ausführungsbeispiel ist daher der Bewegungsablauf des Ankoppelns an das Unterstützungselement 6 und des Abkoppelns von der Transporteinheit 3 entweder durch Verfahren der Transporteinheit 3 oder durch gegenläufiges Verfahren der weiteren Transporteinheit 26 oder durch Verfahren beider Transporteinheiten 3, 26 aufeinander zu erreichbar.

In Figur 15 ist ersichtlich, dass alle Unterstützungselemente 6 auf einer gemeinsamen weiteren Transporteinheit 26 angeordnet sind. Daher sind die Unterstützungselemente 26 gemeinsam verfahrbar.

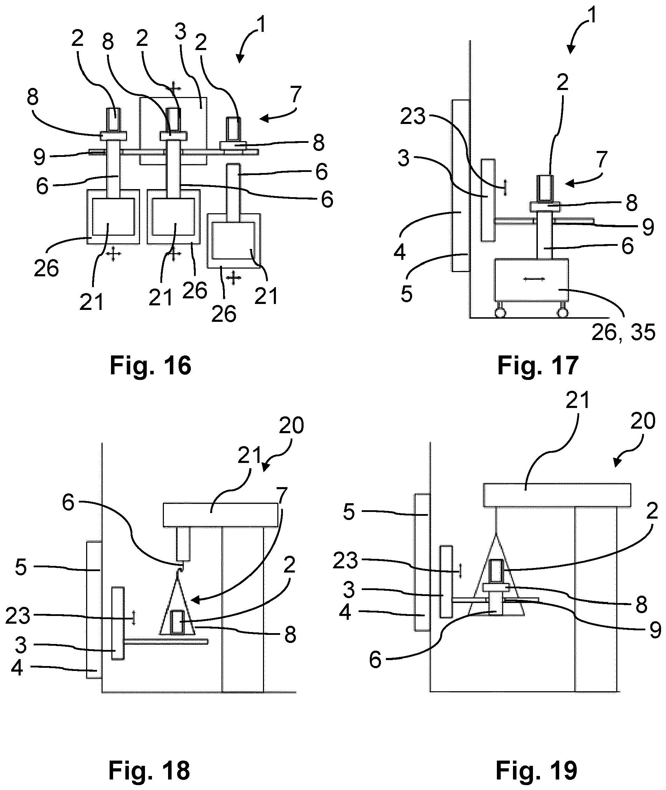

Fig. 16 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 15 gelten daher zu Figur 16 entsprechend.

Das Ausführungsbeispiel nach Fig. 16 unterscheidet sich von den vorangehenden Ausführungsbeispielen dadurch, dass die Unterstützungselemente 6 auf individuellen Transporteinheiten 26 angeordnet und somit unabhängig voneinander verfahrbar sind.

Fig. 17 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 16 gelten daher zu Figur 17 entsprechend.

Das Ausführungsbeispiel nach Figur 17 unterscheidet sich von den vorhergehenden Ausführungsbeispielen dadurch, dass das wenigstens eine Unterstützungselement 6 auf einem Wagen 35 (als Beispiel für eine weitere, nicht induktiv verfahrbare Transporteinheit 26) angeordnet ist. Sofern der Wagen 35 einen Antrieb hat, kann er zumindest teilweise für die Erzeugung einer Relativbewegung von Behälter 2 und Unterstützungselement 6 verwendet werden.

Fig. 18 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 16 gelten daher zu Figur 17 entsprechend.

Das Ausführungsbeispiel nach Figur 18 unterscheidet sich von den vorhergehenden Ausführungsbeispielen dadurch, dass die Behälteraufnahme 8 für eine hängende Anordnung an dem hakenförmigen Unterstützungselement 6 ausgebildet ist.

Die Prozessstation 20 kann hierbei beispielsweise eine Waage sein.

Fig. 19 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 18 gelten daher zu Figur 19 entsprechend.

Das Ausführungsbeispiel nach Figur 19 unterscheidet sich von den vorhergehenden Ausführungsbeispielen dadurch, dass ein stiftförmiges Unterstützungselement 6 in hängender Anordnung an einem Träger 21 ausgebildet ist.

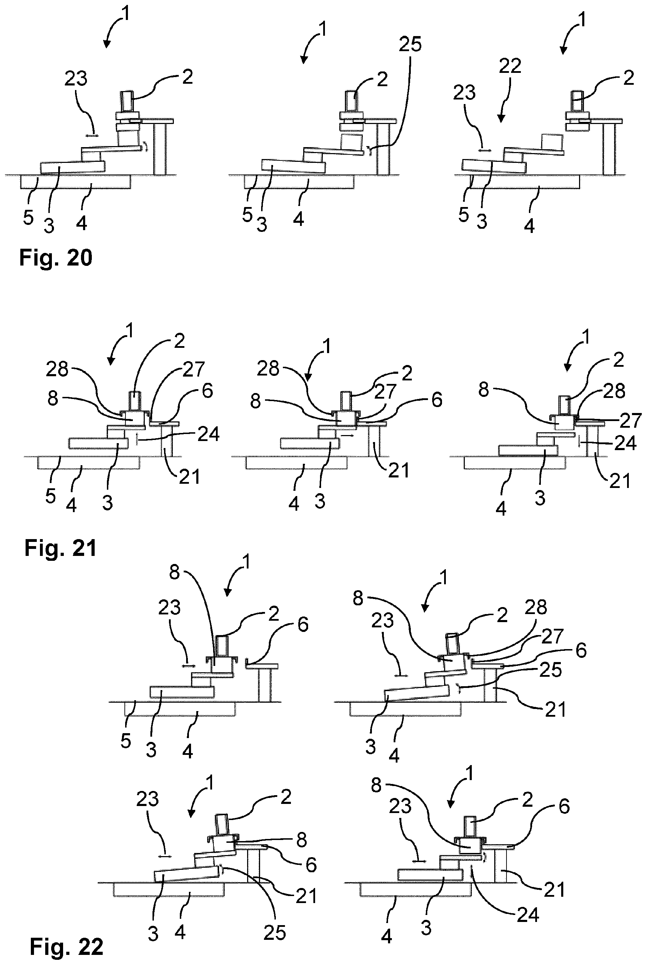

Fig. 20 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 19 gelten daher zu Figur 20 entsprechend.

Bei dem Ausführungsbeispiel nach Figur 20 wird zunächst in einer Verfahrbewegung 23, die mit einer Kippbewegung 25 kombiniert ist, die Behälteraufnahme 8 an das Unterstützungselement 6 herangefahren (linkes Bild).

Anschließend wird die Behälteraufnahme 8 durch eine gegenläufige Kippbewegung 25 abgesenkt (mittleres Bild) und in einen Parkraum 22 verfahren (rechtes Bild).

Fig. 21 und 22 zeigen ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 20 gelten daher zu den Figuren 21 und 22 entsprechend.

Das Ausführungsbeispiel nach den Figuren 21 und 22 unterscheidet sich von den vorhergehenden Ausführungsbeispielen dadurch, dass an dem Unterstützungselement 6 ein Haltedorn 27 ausgebildet ist, der in eine umlaufende Krempe 28 an der Behälteraufnahme 8 eingreift und diese trägt.

Hierzu kann die Transporteinheit 3 gemäß Fig. 21 mit einer Hubbewegung 24 (linkes Bild), gefolgt von einer Verfahrbewegung 23 (mittleres Bild) und einer abschließenden gegenläufigen Hubbewegung 24 (rechtes Bild) die wenigstens eine Behälteraufnahme 8 an dem Unterstützungselement 6 einhängen.

Fig. 22 zeigt einen alternativen Bewegungsablauf mit einer Verfahrbewegung 23 (links oben), einer kombinierten Verfahrbewegung 23 und Kippbewegung 25 (rechts oben), einer kombinierten gegenläufigen Verfahrbewegung 23 mit einer gegenläufigen Kippbewegung (links unten) und einer kombinierten Verfahrbewegung 23 und (absenkenden) Hubbewegung 24 (rechts unten).

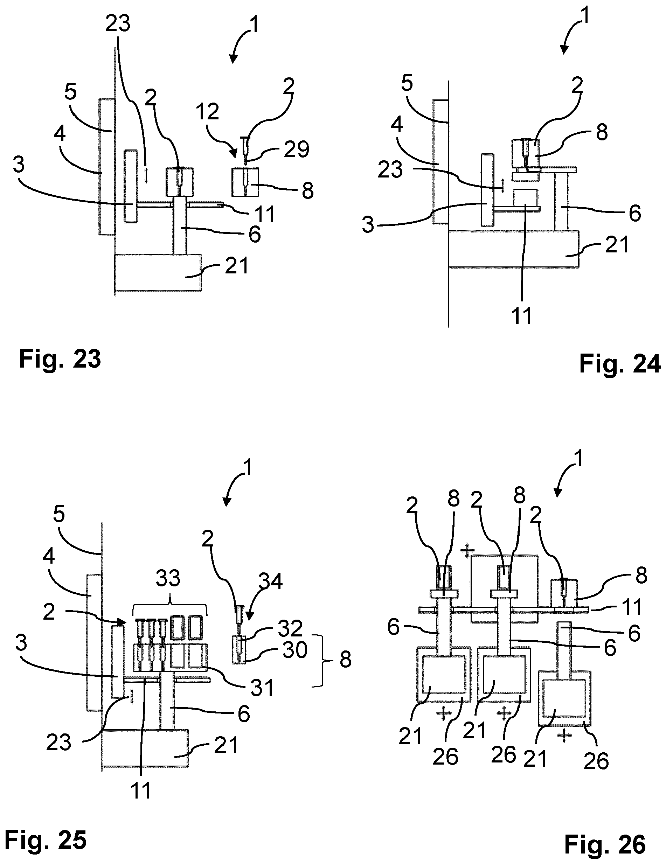

Fig. 23 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 22 gelten daher zu Figur 23 entsprechend.

Das Ausführungsbeispiel nach Fig. 23 unterscheidet sich von den vorangehenden Ausführungsbeispielen zumindest dadurch, dass der Behälter 2 keine Aufstellfläche, sondern einen unebenen Boden 29 hat und somit nicht selbst stabil stehen kann. Die Behälteraufnahme 8 ist hier an ihrer dem Behälter 2 zugewandten Seite 12 mit einer Innenkontur versehen, die auf eine Kontur des Behälters 2 abgestimmt ist.

Fig. 24 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 23 gelten daher zu Figur 24 entsprechend.

Das Ausführungsbeispiel nach Fig. 24 unterscheidet sich von den vorangehenden Ausführungsbeispielen zumindest dadurch, dass die Ankopplung der Behälteraufnahme 8 an das Unterstützungselement 6 mit einer Hubbewegung stattfindet, die - da die Antriebsfläche vertikal ausgerichtet ist - horizontal orientiert ist.

Der Grundkörper 11 kann bei diesem Ausführungsbeispielen, aber auch bei anderen Ausführungsbeispielen, gegen einen anderen Grundkörper 11 ausgetauscht werden. Somit kann auf einfache Weise eine Anpassung auf unterschiedliche dimensionierte Behälter 2 mit zugehörigen Behälteraufnahmen 8 erreicht werden.

Fig. 25 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 24 gelten daher zu Figur 25 entsprechend.

Figur 25 zeigt eine Behälteraufnahme 8 zur gleichzeitigen Aufnahme von mehreren unterschiedlichen Behältern 2.

Figur 25 zeigt außerdem stellvertretend für alle anderen Ausführungsbeispiele, dass jeder Behälter 2 von der Behälteraufnahme 8 entfernt werden kann.

Die Behälteraufnahme 8 kann hier nicht nur mehrere Behälter 2 als Gruppe 33 aufnehmen, sondern weist unabhängig davon einen Behälter-Teil 30 (also beispielsweise ein dem Behälter 2 zugewandtes und/oder diesen kontaktierender Teil der Behälteraufnahme 8) und einen Unterstützungs-Teil 31 (also beispielsweise ein dem Unterstützungselement 16 zugewandtes und/oder dieses kontaktierender Teil der Behälteraufnahme 8) auf, die zusammengesetzt werden können, um die Behälteraufnahme 8 zu bilden.

Hierbei ist vorgesehen, dass sich der Behälter-Teil 30, der mit dem wenigstens einen Behälter 2 verbindbar ist, von dem Unterstützungs-Teil 31, der an das wenigstens eine Unterstützungselement 6 und/oder die Transporteinheit 3 koppelbar ist, trennen lässt.

Der Behälter-Teil 30 hat hierbei eine spezielle Aufnahmeform 32, die auf den Behälter 2 abgestimmt ist.

In einem Vorrat 34, der bevorzugt von den Transporteinheiten 3 angefahren werden kann, werden unterschiedliche Behälteraufnahmen 8 oder zumindest unterschiedliche Behälter-Teile 30 zum Austausch bereitgehalten.

Figur 26 zeigt schließlich beispielhaft die Verwendung mehrerer individuell verfahrbarer Unterstützungselemente 6 in Verbindung mit unterschiedlichen Behältern 2 und Behälteraufnahmen 8.

In den Ausführungsbeispielen ist erkennbar, dass die Behälteraufnahme 8 formschlüssig an der Transporteinheit 3 gehalten ist. Dies kann durch Magnetkräfte verstärkt sein.

Die Behälter 2 sind formschlüssig an der Behälteraufnahme 8 gehalten. Auch dies kann durch Magnetkräfte verstärkt sein.

Mit der Bearbeitungsvorrichtung 1 ist somit ein Verfahren zum Processing wenigstens eines Behälters 2 ausführbar, wobei der wenigstens eine Behälter 2 mit einer Transporteinheit 3, die magnetisch an eine Statoranordnung 4 gekoppelt ist und durch eine Bestromung der Statoranordnung 4 auf einer Antriebsfläche 5 verfahrbar ist, zu wenigstens einem Unterstützungselement 6 verfahren wird, wobei der wenigstens eine Behälter 2 - über die Behälteraufnahme 2 - durch eine Relativbewegung von Transporteinheit 3 und Unterstützungselement 6 mit dem wenigstens einen Unterstützungselement 6 gekoppelt wird.

Hierbei wird wenigstens eine Behälteraufnahme 8 der Transporteinheit 3 den wenigstens einen Behälter 2 tragen.

Die wenigstens eine Behälteraufnahme 8 ist von der Transporteinheit 3 entkoppelbar.

Das wenigstens eine Unterstützungselement 6 greift zum Koppeln an der wenigstens einen Behälteraufnahme 8.

Anschließend wird das Processing des wenigstens einen Behälters 2 ausgeführt, wenn der wenigstens eine Behälter 2 mit dem wenigstens einen Unterstützungselement 6 gekoppelt ist.

Bei der erfindungsgemäßen Bearbeitungsvorrichtung 1 wird somit vorgeschlagen, zwischen einer Transporteinheit 3, die magnetisch an eine Statoranordnung 4 gekoppelt ist, um über eine Antriebsfläche 5 verfahren zu werden, und dem Behälter 2 eine Behälteraufnahme 8 anzuordnen, die wahlweise mit dem Unterstützungselement 6 und der Transporteinheit 3 koppelbar ist.

### Bezugszeichenliste

- 1: Bearbeitungsvorrichtung
- 2: Behälter
- 3: Transporteinheit
- 4: Statoranordnung
- 5: Antriebsfläche
- 6: Unterstützungselement
- 7: Arbeitsraum
- 8: Behälteraufnahme
- 9: Durchgriff
- 10: Gabel von 3
- 11: Grundkörper von 3
- 12: Seite von 8
- 13: Aufstellfläche
- 14: Aufnahmegeometrie von 3
- 15: Auflage von 14
- 16: Gabel von 6
- 17: Ausnehmung von 8
- 18: Absatz von 17
- 19: beweglicher Teil von 20
- 20: Prozessstation
- 21: Träger
- 22: Parkraum für 3
- 23: Verfahrbewegung
- 24: Hubbewegung
- 25: Kippbewegung
- 26: (weitere) Transporteinheit
- 27: Haltedorn
- 28: (umlaufende) Krempe
- 29: (nicht-ebener) Boden
- 30: Behälter-Teil
- 31: Unterstützungs-Teil
- 32: Aufnahmeform
- 33: Gruppe
- 34: Vorrat
- 35: Wagen

## Patentansprüche

1. Bearbeitungsvorrichtung (1) zum Processing wenigstens eines Behälters (2), mit einer Transporteinheit (3), die magnetisch an eine Statoranordnung (4) gekoppelt ist und durch eine Bestromung der Statoranordnung (4) auf einer Antriebsfläche (5) verfahrbar ist, wobei wenigstens ein Unterstützungselement (6) einen Arbeitsraum (7) zum Processing des Behälters (2) definiert, wobei der Behälter (2) durch eine Relativbewegung von Transporteinheit (3) und Unterstützungselement (6) mit dem Unterstützungselement (6) koppelbar ist, wobei die Transporteinheit (3) wenigstens eine Behälteraufnahme (8), die den wenigstens einen Behälter (2) trägt, hat, und **dadurch gekennzeichnet, dass** die wenigstens eine Behälteraufnahme (8) von der Transporteinheit (3) entkoppelbar ist und dass das wenigstens eine Unterstützungselement (6) zum Koppeln mit dem Behälter (2) an der wenigstens einen Behälteraufnahme (8) angreift.

2. Bearbeitungsvorrichtung (1) nach Anspruch 1, **dadurch gekennzeichnet, dass** die wenigstens eine Behälteraufnahme (8) durch die Relativbewegung von der Transporteinheit (3) entkoppelbar ist.

3. Bearbeitungsvorrichtung (1) nach einem der vorangehenden Ansprüche, **dadurch gekennzeichnet, dass** das wenigstens eine Unterstützungselement (6) zum Angreifen an der wenigstens einen Behälteraufnahme (8) verfahrbar und/oder ortsfest angeordnet ist und/oder dass die Transporteinheit (3) einen Durchgriff (9), insbesondere an einem die wenigstens eine Behälteraufnahme (8) tragenden Grundkörper (11), für das wenigstens eine Unterstützungselement (6) zur Behälteraufnahme (8) bildet.

4. Bearbeitungsvorrichtung (1) nach einem der vorangehenden Ansprüche, **dadurch gekennzeichnet, dass** die wenigstens eine Behälteraufnahme (8) an ihrer dem wenigstens einen Behälter (2) zugewandten Seite (12) an den wenigstens einen Behälter (2) formangepasst ist und/oder dass die Transporteinheit (3) eine Aufnahmegeometrie (14) hat, mit welcher die wenigstens eine Behälteraufnahme (8) aufnehmbar ist, insbesondere wobei die Aufnahmegeometrie (14) eine Auflage (15) hat, auf der die wenigstens eine Behälteraufnahme (8) abgelegt ist.

5. Bearbeitungsvorrichtung (1) nach einem der vorangehenden Ansprüche, **dadurch gekennzeichnet, dass** das wenigstens eine Unterstützungselement (6) die wenigstens eine Behälteraufnahme (8) außenseitig greift, insbesondere eine Gabel (10) zur Aufnahme der wenigstens einen Behälteraufnahme (8) hat.

6. Bearbeitungsvorrichtung (1) nach einem der vorangehenden Ansprüche, **dadurch gekennzeichnet, dass** die Bearbeitungsvorrichtung (1) eine Prozessstation (20) hat, mit welcher das Processing ausführbar ist, insbesondere wobei die Prozessstation (20) eine Füllstation, eine Waage, eine Kontrollstation und/oder eine Verschließstation umfasst, und/oder dass das Unterstützungselement (6) einen vorzugsweise beweglichen Teil einer oder der Prozessstation, insbesondere einer Waage, einer Füllstation und/oder einer Verschließstation bildet.

7. Bearbeitungsvorrichtung (1) nach einem der vorangehenden Ansprüche, **dadurch gekennzeichnet, dass** das wenigstens eine Unterstützungselement (6) an einem Träger (21) angeordnet ist, der einen Parkraum (22) für die Transporteinheit (3) während der Abkopplung des wenigstens einen Behälters (2) bereitstellt.

8. Bearbeitungsvorrichtung (1) nach einem der vorangehenden Ansprüche, **dadurch gekennzeichnet, dass** der Behälter (2) lösbar mit der wenigstens einen Behälteraufnahme (8) verbunden ist und/oder dass die wenigstens eine Behälteraufnahme (8) lösbar mit einem vorzugsweise austauschbaren Grundkörper (11) der Transporteinheit (3) verbunden ist.

9. Bearbeitungsvorrichtung (1) nach einem der vorangehenden Ansprüche, **dadurch gekennzeichnet, dass** das wenigstens eine Unterstützungselement (6), vorzugsweise an einem Träger (21), an der oder benachbart zur Antriebsfläche (5) befestigt ist und/oder dass das wenigstens eine Unterstützungselement (6) so ausgerichtet ist, dass eine Koppelbewegung der Kopplung mit dem wenigstens einen Behälter (2), insbesondere zum Angreifen an der wenigstens einen Behälteraufnahme (8), längs der und/oder quer zur Antriebsfläche (5) erfolgt.

10. Bearbeitungsvorrichtung (1) nach einem der vorangehenden Ansprüche, **dadurch gekennzeichnet, dass** die wenigstens eine Behälteraufnahme (8) zur gleichzeitigen Aufnahme von mehr als einem Behälter (2) ausgebildet ist und/oder dass die wenigstens eine Behälteraufnahme (8) zum Tragen eines abgestimmten Behälters (2) mit nicht-ebenem Boden (29) ausgebildet ist.

11. Bearbeitungsvorrichtung (1) nach einem der vorangehenden Ansprüche, **dadurch gekennzeichnet, dass** die wenigstens eine Behälteraufnahme (8) zweiteilig ausgeführt ist, insbesondere wobei sich ein Behälter-Teil (30), der mit dem wenigstens einen Behälter (2) verbindbar ist, von einem Unterstützungs-Teil (31), der an das wenigstens eine Unterstützungselement (6) koppelbar ist, trennen lässt.

12. Bearbeitungsvorrichtung (1) nach einem der vorangehenden Ansprüche, **dadurch gekennzeichnet, dass** die wenigstens eine Behälteraufnahme (8) im mit der Transporteinheit (3) gekoppeltem Zustand durch Formschluss und/oder Kraftschluss, insbesondere durch Magnetkräfte, in Position gehalten ist und/oder im mit dem Unterstützungselement (6) gekoppeltem Zustand durch Formschluss und/oder Kraftschluss, insbesondere durch Magnetkräfte, in Position gehalten ist.

13. Bearbeitungsvorrichtung (1) nach einem der vorangehenden Ansprüche, **dadurch gekennzeichnet, dass** die wenigstens eine Behälteraufnahme (8) eine Aufnahmeform, vorzugsweise mit wenigstens einem Absatz und/oder mit einer Ausnehmung, zum Koppeln mit dem wenigstens einen Unterstützungselement (6), vorzugsweise mit einer Gabel (16) des wenigstens einen Unterstützungselements (6), aufweist.

14. Bearbeitungsvorrichtung (1) nach einem der vorangehenden Ansprüche, **dadurch gekennzeichnet, dass** mehr als eine Behälteraufnahme (8) vorhanden ist, insbesondere wobei die Behälteraufnahmen (8) zumindest teilweise separat voneinander und/oder zusammen mit dem wenigstens einen Unterstützungselement (6), insbesondere jeweils mit einem zugeordneten Unterstützungselement (6), koppelbar und/oder von der Transporteinheit (3) entkoppelbar sind und/oder dass in einem Vorrat (34) Behälteraufnahmen (8) oder Behälter-Teile (30) davon bereitgehalten sind, die wahlweise je nach zu transportierendem Behälter (2) an der Transporteinheit (3) austauschbar sind.

15. Verfahren zum Processing wenigstens eines Behälters (2), insbesondere mit einer Bearbeitungsvorrichtung (1) nach einem der vorangehenden Ansprüche, wobei der wenigstens eine Behälter (2) mit einer Transporteinheit (3), die magnetisch an eine Statoranordnung (4) gekoppelt ist und durch eine Bestromung der Statoranordnung (4) auf einer Antriebsfläche (5) verfahrbar ist, zu wenigstens einem Unterstützungselement (6) verfahren wird, wobei der wenigstens eine Behälter (2) durch eine Relativbewegung von Transporteinheit und Unterstützungselement (6) mit dem wenigstens einen Unterstützungselement (6) gekoppelt wird, wobei wenigstens eine Behälteraufnahme (8) der Transporteinheit (3) den wenigstens einen Behälter (2) trägt, und **dadurch gekennzeichnet, dass** die wenigstens eine Behälteraufnahme (8) von der Transporteinheit (3) entkoppelbar ist, dass das wenigstens eine Unterstützungselement (6) zum Koppeln an der wenigstens einen Behälteraufnahme (8) angreift und dass das Processing des wenigstens einen Behälters (2) ausgeführt wird, wenn das wenigstens eine Unterstützungselement (6) an der wenigstens einen Behälteraufnahme (8) angreift, insbesondere wenn der wenigstens eine Behälter (2) mit dem wenigstens einen Unterstützungselement (6) gekoppelt ist.

## Claims

1. Processing device (1) for processing at least one container (2), having a transport unit (3) which is coupled magnetically to a stator arrangement (4) and which is able to be moved on a drive surface (5) by way of energization of the stator arrangement (4), wherein at least one support element (6) defines a working space (7) for processing of the container (2), wherein the container (2) is able to be coupled to the support element (6) by way of a relative movement of transport unit (3) and support element (6), wherein the transport unit (3) has at least one container-receiving means (8) which carries the at least one container (2),
**characterized in that** the at least one container-receiving means (8) is able to be decoupled from the transport unit (3), and **in that** the at least one support element (6), for coupling to the container (2), acts on the at least one container-receiving means (8).

2. Processing device (1) according to Claim 1, **characterized in that** the at least one container-receiving means (8) is able to be decoupled from the transport unit (3) by way of the relative movement.

3. Processing device (1) according to either of the preceding claims, **characterized in that** the at least one support element (6), for acting on the at least one container-receiving means (8), is arranged so as to be movable and/or positionally fixed, and/or in that the transport unit (3) forms a passage (9), in particular in a main body (11) carrying the at least one container-receiving means (8), for the at least one support element (6) to the container-receiving means (8).

4. Processing device (1) according to one of the preceding claims, **characterized in that**, on its side (12) facing towards the at least one container (2), the at least one container-receiving means (8) is adapted in terms of shape to the at least one container (2), and/or **in that** the transport unit (3) has a receiving geometry (14) by way of which the at least one container-receiving means (8) is able to be received, in particular wherein the receiving geometry (14) has a support (15) on which the at least one container-receiving means (8) is placed.

5. Processing device (1) according to one of the preceding claims, **characterized in that** the at least one support element (6) grips the at least one container-receiving means (8) on the outside, in particular has a fork (10) for receiving the at least one container-receiving means (8).

6. Processing device (1) according to one of the preceding claims, **characterized in that** the processing device (1) has a process station (20) by way of which the processing is able to be carried out, in particular wherein the process station (20) comprises a filling station, scales, a control station and/or a closure station, and/or **in that** the support element (6) forms a preferably movable part of a or of the process station, in particular scales, a filling station and/or a closure station.

7. Processing device (1) according to one of the preceding claims, **characterized in that** the at least one support element (6) is arranged on a carrier (21) which provides a parking space (22) for the transport unit (3) during the decoupling of the at least one container (2).

8. Processing device (1) according to one of the preceding claims, **characterized in that** the container (2) is connected releasably to the at least one container-receiving means (8), and/or **in that** the at least one container-receiving means (8) is connected releasably to a preferably exchangeable main body (11) of the transport unit (3).

9. Processing device (1) according to one of the preceding claims, **characterized in that** the at least one support element (6) is fastened, preferably on a carrier (21), to or adjacent to the drive surface (5), and/or **in that** the at least one support element (6) is oriented in such a way that a coupling movement of the coupling to the at least one container (2), in particular for action on the at least one container-receiving means (8), is realized along and/or transversely to the drive surface (5).

10. Processing device (1) according to one of the preceding claims, **characterized in that** the at least one container-receiving means (8) is configured for simultaneously receiving more than one container (2), and/or **in that** the at least one container-receiving means (8) is configured for carrying a matched container (2) with a non-planar base (29).

11. Processing device (1) according to one of the preceding claims, **characterized in that** the at least one container-receiving means (8) is of two-part design, in particular wherein a container part (30), which is able to be connected to the at least one container (2), can be separated from a support part (31), which is able to be coupled at the at least one support element (6).

12. Processing device (1) according to one of the preceding claims, **characterized in that** the at least one container-receiving means (8), in the state in which it is coupled to the transport unit (3), is held in position by way of form-fitting and/or force-fitting, in particular by way of magnetic forces, and/or, in the state in which it is coupled to the support element (6), is held in position by way of form-fitting and/or force-fitting, in particular by way of magnetic forces.

13. Processing device (1) according to one of the preceding claims, **characterized in that** the at least one container-receiving means (8) has a receiving shape, preferably with at least one shoulder and/or with a recess, for coupling to the at least one support element (6), preferably to a fork (16) of the at least one support element (6).

14. Processing device (1) according to one of the preceding claims, **characterized in that** more than one container-receiving means (8) is present, in particular wherein the container-receiving means (8), at least partially separately from one another and/or together, are able to be coupled to the at least one support element (6), in particular in each case to an assigned support element (6), and/or are able to be decoupled from the transport unit (3), and/or **in that** container-receiving means (8) or container parts (30) thereof, which are selectively exchangeable according to the container (2) to be transported at the transport unit (3), are held ready in a store (34).

15. Method for processing at least one container (2), in particular using a processing device (1) according to one of the preceding claims, wherein the at least one container (2) is moved to at least one support element (6) by way of a transport unit (3) which is coupled magnetically to a stator arrangement (4) and which is able to be moved on a drive surface (5) by way of energization of the stator arrangement (4), wherein the at least one container (2) is coupled to the at least one support element (6) by way of a relative movement of transport unit and support element (6), wherein at least one container-receiving means (8) of the transport unit (3) carries the at least one container (2),
**characterized in that** the at least one container-receiving means (8) is able to be decoupled from the transport unit (3), **in that** the at least one support element (6), for coupling, acts on the at least one container-receiving means (8), and **in that** the processing of the at least one container (2) is carried out when the at least one support element (6) acts on the at least container-receiving means (8), in particular when the at least one container (2) is coupled to the at least one support element (6) .

## Revendications

1. Dispositif de traitement (1) pour le traitement d'au moins un récipient (2), comprenant une unité de transport (3) qui est couplée de façon magnétique à un ensemble de stator (4) et qui peut être déplacée sur une surface d'entraînement (5) par l'intermédiaire d'une alimentation en courant de l'ensemble de stator (4), dans lequel au moins un élément de support (6) définit un espace de travail (7) pour le traitement du récipient (2), dans lequel le récipient (2) peut être couplé à l'élément de support (6) par l'intermédiaire d'un mouvement relatif de l'unité de transport (3) et de l'élément de support (6), dans lequel l'unité de transport (3) présente au moins un logement de récipient (8) qui porte ledit au moins un récipient (2), et **caractérisé en ce que** ledit au moins un logement de récipient (8) peut être désaccouplé de l'unité de transport (3) et **en ce que** ledit au moins un élément de support (6) s'engage avec ledit au moins un logement de récipient (8) pour être couplé au récipient (2).

2. Dispositif de traitement (1) selon la revendication 1, **caractérisé en ce que** ledit au moins un logement de récipient (8) peut être désaccouplé de l'unité de transport (3) par l'intermédiaire du mouvement relatif.

3. Dispositif de traitement (1) selon l'une quelconque des revendications précédentes, **caractérisé en ce que** ledit au moins un élément de support (6) est agencé de façon mobile et/ou fixe pour s'engager sur ledit au moins un logement de récipient (8), et/ou **en ce que** l'unité de transport (3) forme un passage (9), en particulier sur un corps de base (11) qui porte ledit au moins un logement de récipient (8), pour ledit au moins un élément de support (6) en direction du logement de récipient (8).

4. Dispositif de traitement (1) selon l'une quelconque des revendications précédentes, **caractérisé en ce que** ledit au moins un logement de récipient (8) est adapté à la forme dudit au moins un récipient (2) sur son côté (12) orienté en direction dudit au moins un récipient (2), et/ou **en ce que** l'unité de transport (3) présente une géométrie de logement (14) grâce à laquelle ledit au moins un logement de récipient (8) peut être reçu, dans lequel la géométrie de logement (14) présente en particulier un support (15) sur lequel ledit au moins un logement de récipient (8) peut être reçu.

5. Dispositif de traitement (1) selon l'une quelconque des revendications précédentes, **caractérisé en ce que** ledit au moins un élément de support (6) saisit ledit au moins un logement de récipient (8) sur le côté extérieur, et présente en particulier une fourche (10) destinée à recevoir ledit au moins un logement de récipient (8).

6. Dispositif de traitement (1) selon l'une quelconque des revendications précédentes, **caractérisé en ce que** le dispositif de traitement (1) présente une station de traitement (20) à l'aide de laquelle le traitement peut être exécuté, dans lequel la station de traitement (20) comprend un particulier une station de remplissage, une balance, une station de commande et/ou une station de fermeture, et/ou **en ce que** l'élément de support (6) forme une partie de préférence mobile de l'une ou de chacune des stations de traitement, en particulier de la balance, de la station de remplissage et/ou de la station de fermeture.

7. Dispositif de traitement (1) selon l'une quelconque des revendications précédentes, **caractérisé en ce que** ledit au moins un élément de support (6) est agencé sur un support (21) qui fournit un espace de stationnement (22) pour l'unité de transport (3) pendant le désaccouplement dudit au moins un récipient (2).

8. Dispositif de traitement (1) selon l'une quelconque des revendications précédentes, **caractérisé en ce que** le récipient (2) est connecté de façon détachable audit au moins un logement de récipient (8), et/ou **en ce que** ledit au moins un logement de récipient (8) est connecté de façon détachable à un corps de base (11), qui est de préférence remplaçable, de l'unité de transport (3).

9. Dispositif de traitement (1) selon l'une quelconque des revendications précédentes, **caractérisé en ce que** ledit au moins un élément de support (6) est fixé, de préférence sur un support (21), sur la surface d'entraînement (5) ou dans le voisinage de celle-ci, et/ou **en ce que** ledit au moins un élément de support (6) est orienté de telle sorte qu'un mouvement de couplage du couplage avec ledit au moins un récipient (2), en particulier pour saisir ledit au moins un logement de récipient (8), soit exécuté le long de la surface d'entraînement (5) et/ou de manière transversale à celle-ci.

10. Dispositif de traitement (1) selon l'une quelconque des revendications précédentes, **caractérisé en ce que** ledit au moins un logement de récipient (8) est configuré de manière à recevoir simultanément plus d'un récipient (2), et/ou **en ce que** ledit au moins un logement de récipient (8) est configuré de manière à supporter un récipient adapté (2) à fond non plat (29).

11. Dispositif de traitement (1) selon l'une quelconque des revendications précédentes, **caractérisé en ce que** ledit au moins un logement de récipient (8) est réalisé en deux parties, en particulier dans lequel une partie de récipient (30) qui est apte à être connectée audit au moins un récipient (2) peut être séparée d'une partie de support (31) qui est apte à être couplée audit au moins un élément de support (6).

12. Dispositif de traitement (1) selon l'une quelconque des revendications précédentes, **caractérisé en ce que** ledit au moins un logement de récipient (8) est maintenu en position par complémentarité de forme et/ou par adhérence, en particulier par l'intermédiaire de forces magnétiques, à l'état couplé à l'unité de transport (3), et/ou est maintenu en position par complémentarité de forme et/ou par adhérence, en particulier par l'intermédiaire de forces magnétiques, à l'état couplé à l'élément de support (6).

13. Dispositif de traitement (1) selon l'une quelconque des revendications précédentes, **caractérisé en ce que** ledit au moins un logement de récipient (8) présente une forme de logement, comportant de préférence au moins un épaulement et/ou un évidement, afin de réaliser le couplage avec ledit au moins un élément de support (6), de préférence avec une fourche (16) dudit au moins un élément de support (6).

14. Dispositif de traitement (1) selon l'une quelconque des revendications précédentes, **caractérisé en ce qu'**il comprend plus d'un logement de récipient (8), en particulier dans lequel les logements de récipient (8) sont au moins partiellement séparés les uns des autres et/ou de concert avec ledit au moins un élément de support (6), en particulier respectivement avec un élément de support (6) associé, et peuvent être couplés et/ou désaccouplés de l'unité de transport (3), et/ou **en ce que** des logements de récipient (8) ou des parties de récipient (30) de ceux-ci sont conservés dans une réserve (34) et peuvent être remplacés de façon interchangeable sur l'unité de transport (3) en fonction du récipient (2) à transporter.

15. Procédé de traitement d'au moins un récipient (2) en utilisant en particulier un dispositif de traitement (1) selon l'une quelconque des revendications précédentes, dans lequel ledit au moins un récipient (2) comprend une unité de transport (3) qui est couplée de façon magnétique à un ensemble de stator (4), qui peut être déplacée sur une surface d'entraînement (5) par l'intermédiaire d'une alimentation en courant de l'ensemble de stator (4) en direction d'au moins un élément de support (6), dans lequel ledit au moins un récipient (2) est couplé audit au moins un élément de support (6) par l'intermédiaire d'un mouvement relatif de l'unité de transport et de l'élément de support (6), dans lequel au moins un logement de récipient (8) de l'unité de transport (3) porte ledit au moins un récipient (2), et **caractérisé en ce que** ledit au moins un logement de récipient (8) peut être désaccouplé de l'unité de transport (3), **en ce que** ledit au moins un élément de support (6) s'engage avec ledit au moins un logement de récipient (8) pour réaliser le couplage, et **en ce que** le traitement dudit au moins un récipient (2) est exécuté lorsque ledit au moins un élément de support (6) s'engage avec ledit au moins un logement de récipient (8), en particulier lorsque ledit au moins un récipient (2) est couplé audit au moins un élément de support (6).
